# EUROPÄISCHE PATENTSCHRIFT

(11) **EP 2 028 580 B1**
(45) Veröffentlichungstag und Bekanntmachung des Hinweises auf die Patenterteilung: **07.04.2010**
(21) Anmeldenummer: 08014633.5
(22) Anmeldetag: 18.08.2008
(51) Int. Cl.: G06F 1/16, B23Q 1/00

(54) **Bedienpult für eine Werkzeugmaschine**
Control box for a machine tool
Dispositif de contrôle pour une machine-outil

(30) Priorität: 22.08.2007 DE 102007039640
(43) Veröffentlichungstag der Anmeldung: 25.02.2009
(73) Patentinhaber: DECKEL MAHO Pfronten GmbH, 87459 Pfronten (DE)
(72) Erfinder: Seitz, Reinhold, 87659 Hopferau (DE); Lechleiter, Karl, 87466 Oy-Mittelberg (DE); Schindler, Dominic, 6923 Lauterach (AT)
(74) Vertreter: MERH-IP Matias Erny Reichl Hoffmann

(56) Entgegenhaltungen:
- WO-A-01/71878
- JP-A- 2003 136 565
- US-A- 5 630 566
- US-A- 5 632 373

## Beschreibung

Die Erfindung betrifft ein Bedienpult einer Werkzeugmaschine mit den angegebenen Merkmalen des Patentanspruchs 1.

Bedienpulte sind wesentlicher Bestandteil moderner programmgesteuerter Werkzeugmaschinen, da sie die funktionale Schnittstelle zwischen dem Bediener und der Programmsteuerung der Werkzeugmaschine darstellen. Je nach dem Maschinentyp und den Funktionen der jeweiligen Werkzeugmaschine werden verschiedenartige Bedienpulte eingesetzt, die mit ihrem jeweils formsteifen Gehäuse entweder direkt an einem Teil der Maschinenwandung bzw. der Schutzkabine montiert oder im Umfeld der Maschine angeordnet sind. Bei komplexen Bearbeitungszentren, wie insbesondere Dreh- und Fräszentren, sind Bedienpulte gebräuchlich, die mit ihrem stabilen Gehäuse am freien Ende eines Tragarmes befestigt sind. Dieser Tragarm verfügt in der Regel über einen horizontalen Armteil, der am Unterbau der Werkzeugmaschine um mindestens eine vertikale Achse schwenkbar angelenkt ist. An diesem horizontalen Armteil schließt ein nach aufwärts gerichteter Armteil an, an dessen freiem Ende das Bedienpult montiert ist. Die jeweilige Länge des horizontalen und des nach aufwärts gerichteten Armteils sind so bemessen, dass das Bedienpult in einem ausreichend großen Schwenkbogen bewegt werden kann und sich in einer ergometrisch optimierten Höhen- und Schräglage befindet. Die Gehäuse derartiger Bedienpulte sind in der Regel einteilig ausgebildet und enthalten in ihrem unteren Teil ein schräg im Raum ausgerichtetes Tastenfeld, in welchem neben einer Buchstaben- und Zahlentastatur eine Reihe von Bedienknöpfen angeordnet ist. Mit dem unteren Gehäuseteil ist ein oberes Gehäuseteil einteilig ausgeführt, das mindestens eine Anzeigeneinheit mit einem dem Bediener zugekehrten Bildschirm enthält. Ein derartiges Bedienpult ist z.B. in dem Prospekt DMC 60 T der Firma DECKEL MAHO gezeigt.

Aus der US-A-5 632 373 ist ein Schutzgehäuse für einen tragbaren Computer bekannt. Das Schutzgehäuse weist eine untere Gehäuseschale zur Aufnahme eines Keyboards und einen oberen Gehäuseteil zur Aufnahme einer eigenständig mobilen Anzeigeneinheit mit einem Bildschirm auf. Der obere Gehäuseteil hat die Form eines flachen rechteckigen Kastens und ist mit dem hinteren Randabschnitt der unteren flachrechteckigen Gehäuseschale über zwei endseitige scheibenförmige Lager verschwenkbar verbunden. An einer Schmalseite des Computergehäuses ist ein zweiarmiger Gelenkbügel vorgesehen, der einen faltbaren Traggriff für den zusammengeklappten Computer bildet.

Aufgabe der Erfindung ist es, ein bei unterschiedlichen Maschinentypen einsetzbares Bedienpult zu schaffen, bei welchem die Bedienung des Tastenfeldes und auch die Erkennbarkeit der in der Anzeigeneinheit dargestellten Sachverhalte optimiert sind und die untere Gehäuseschale mit dem darin angeordneten Tastenfeld in eine für den jeweiligen Bediener geeignete Schräglage verschwenkt werden kann.

Diese Aufgabe wird durch die Merkmale des Patentanspruchs 1 gelöst.

Die Ausrichtung der unteren Gehäuseschale mit der in diese eingebauten Tastatur in verschiedene Schwenklagen ermöglicht eine Anpassung der Betriebsstellung des Tastenfeldes an individuelle Gegebenheiten des Bedieners, beispielsweise an seine Körpergröße. Falls besonders langwierige Programmierarbeiten im Sitzen durchgeführt werden, kann das Tastenfeld zusammen mit der unteren Gehäuseschale in eine entsprechende Schräglage verschwenkt werden. Auch der obere Gehäuseteil lässt sich vorzugsweise gesondert in eine gewünschte Raumlage gegenüber dem unteren Gehäuseteil verschwenken, was auch hier eine Anpassung an individuelle Gegebenheiten des Bedieners gestattet. Beispielsweise kann die obere Anzeigeneinheit zusammen mit dem oberen Gehäuseteil in eine Schräglage gebracht werden, in welcher bestmögliche Kontraste und eine minimale Blendwirkung erzielt werden können.

Die untere Gehäuseschale und der obere Gehäuseteil sind auf einer gemeinsamen Hohlwelle gelagert, die vorzugsweise horizontal ausgerichtet ist. Bevorzugt befindet sich diese Hohlwelle am rückwärtigen Endbereich der unteren Gehäuseschale und an dem unteren Endbereich des oberen Gehäuseteils, wobei jeweils buchsenartige Lageranordnungen der beiden Gehäuseteile die Hohlwelle umgreifen.

Die auf der Hohlwelle vorgesehene Lageranordnung ist über ein Verbindungselement mit dem oberen Ende des Tragholms fest verbunden. Der Tragholm ist in herkömmlicher Weise als Hohlprofil ausgebildet und enthält einen inneren Kabelkanal, der sich in der Lageranordnung und daran anschließend in der Hohlwelle fortsetzt. Auf diese Weise wird eine betriebssichere und im Bedarfsfall einfach zugängliche Kabelführung erreicht. Zum Einführen der verschiedenen Kabelstränge in den Innenraum der unteren Gehäuseschale einerseits und in den Innenraum des oberen Gehäuseteils andererseits sind in der Hohlwelle seitliche Ausschnitte ausgebildet, die ausreichend groß sind, um in den verschiedenen Schwenkstellungen der Gehäuseteile eine beschädigungsfreie Durchführung der Kabel zu ermöglichen.

Bei einer bevorzugten Ausgestaltung der Erfindung kann das Arretieren der unteren Gehäuseschale mit Hilfe von einem oder mehreren Fixiermechanismen durchgeführt werden. Auch der obere Gehäuseteil mit der Anzeigeneinheit kann durch die gleichen Fixiermechanismen in einer ausgewählten Betriebsstellung festgestellt werden. Allerdings besteht auch die Möglichkeit, die beiden Gehäuseteile, d.h. die untere Gehäuseschale und den oberen Gehäuseteil, jeweils durch gesonderte Rast- oder Klemmmechanismen in ausgewählten Betriebsstellungen zu fixieren.

Beispielsweise kann in der unteren Gehäuseschale ein Druckmittelzylinder quer zur Längsachse der Hohlwelle angeordnet werden, dessen Kolben auf ein vorzugsweise schalenförmiges Klemmelement einwirkt und dieses gegen eine oberflächenbehandelte Mantelfläche der Hohlwelle drückt. Stattdessen oder auch zusätzlich können axiale Spannmittel z.B. in Form eines Deckels mit Spannschraube eingesezt werden, die auf die Lageranordnungen der beiden Gehäuseteile einen Axialdruck ausüben und eine gegenseitige Klemmung dieser Lageranordnungen herbeiführen.

In Anlehnung an die Bedienung von PCs kann die Bedienung des erfindungsgemäßen Bedienpults auch unter Verwendung einer sog. Computer-Maus erfolgen. Ermöglicht wird diese Bedienungsart durch Vorsehen einer seitlich abstehenden verschwenkbaren Auflageplatte für eine mit den Steuerelementen des Bedienpultes funktionsmäßig verbundenen Maus, die vom Bediener durch Bewegen auf der Auflageplatte betätigt wird. Zweckmäßig ist diese Auflageplatte über einen rückseitigen Halter auf der Hohlwelle gelagert und in einer etwa horizontalen Betriebsstellung arretierbar. Die Auflagerplatte kann gesondert oder zusammen mit der unteren Gehäuseschale aus ihrer Betriebsposition in eine Stand-by-Position verschwenkt werden. In ihrer etwa in die Vertikale geschwenkten Stellung kann die Auflageplatte auch als Beleghalter dienen. Daneben besteht auch die Möglichkeit, neben dem oberen Gehäuseteil einen seitlich abstehenden plattenförmigen Beleghalter vorzusehen, der an der unteren Rückseite des oberen Gehäuseteils montiert werden kann.

Eine vorteilhafte Ausgestaltung der Erfindung zeichnet sich noch dadurch aus, dass an der unteren Gehäuseschale, vorzugsweise an einer ihrer Seitenwände, Berechtigungstasten für verschiedene Bedienungsarten und -personen sowie eine übergeordnete Schlüsselaufnahme vorgesehen sind.

Um langwierige Arbeiten am Bedienpult bequem und ohne übermäßige Ermüdungserscheinungen zu ermöglichen, ist für den Bediener ein verstellbarer Sitz vorgesehen, der aus einer Stand-by-Position in eine Betriebsstellung verstellt werden kann. Zweckmäßig enthält der Sitz ein horizontales, vorzugsweise zylindrisches, gepolstertes Sitzelement und einen teleskopisch längs verstellbaren Tragholm, der auf der Hohlwelle verschwenkbar und in vorbestimmten Betriebsstellungen feststellbar gelagert ist.

Im Folgenden wird die Erfindung anhand von in der Zeichnung dargestellten Ausführungsbeispielen ausführlich erläutert. Es zeigen:
- Fig. 1: ein Bedienpult gemäß der Erfindung in perspektivischer Gesamtansicht;
- Fig. 2: die Gehäuseteile des erfindungsgemäßen aufgeklappten Bedienpults nach Fig. 1 in perspektivischer Vorderansicht;
- Fig. 3: die Gehäuseteile des erfindungsgemäßen aufgeklappten Bedienpults nach Fig. 1 in perspektivischer Rückansicht;
- Fig. 4: die Gehäuseteile des erfindungsgemäßen Bedienpults nach Fig. 1 im Vertikalschnitt;
- Fig. 5: einen an der Werkzeugmaschine gelenkig montierbaren Tragarm für das Bedienpult in perspektivischer Explosions darstellung,

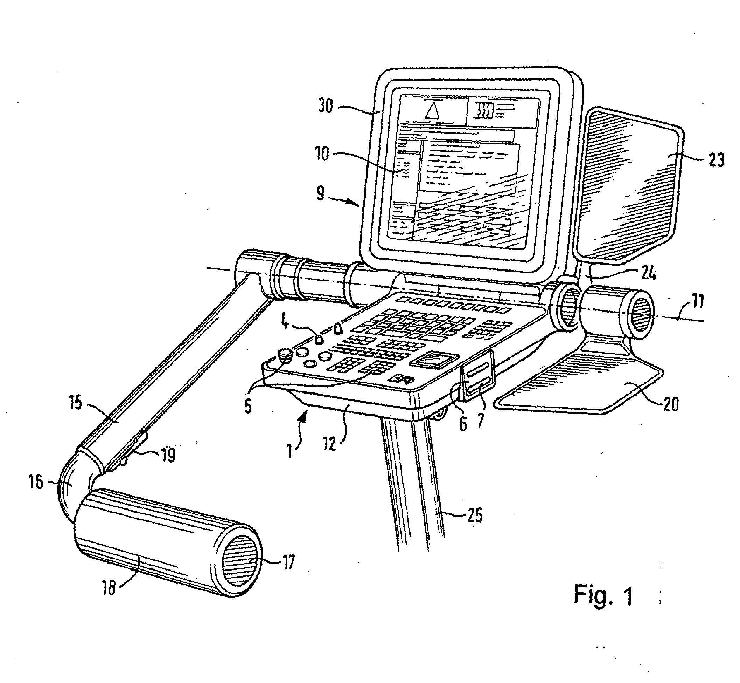

Wie aus Fig. 1 ersichtlich, weist das erfindungsgemäße Bedienpult eine untere Gehäuseschale 1 auf, die oben von einem Tastenfeld 2 abgedeckt ist, in welchem Schalter, Tasten und Anzeigen 4, 5 angeordnet sind. In der in Fig. 1 rechten Seitenwand der unteren Gehäuseschale 1 befinden sich Berechtigungstasten 6 für verschiedene Bedienungsarten und -personen sowie eine Schlüsselaufnahme 7, in welche von dem jeweils Berechtigten ein spezieller Schlüssel, eine Code-Karte oder ein anderes Identifikationsteil eingesteckt wird.

Am hinteren Rand der unteren Gehäuseschale 1 ist ein oberer flacher Gehäuseteil 9 verschwenkbar gelagert, in welchem ein großflächiger Bildschirm 10 befestigt ist. Die untere Gehäuseschale 1 und der obere Gehäuseteil 9 können einzeln und/oder gemeinsam Schwenkbewegungen um die Horizontalachse 11 ausführen und in bevorzugten Betriebsstellungen durch Betätigen von geeigneten Arretiermechanismen, beispielsweise durch Drücken eines Knopfes 12 an der verdeckten Stirnseite der unteren Gehäuseschale 1, festgestellt und gegen weiteres unbeabsichtigtes Verdrehen gesichert werden. Die untere Gehäuseschale 1 und der obere Gehäuseteil 9 bestehen bei diesem Ausführungsbeispiel aus Leichtmetallguss. Sie können jedoch auch komplett oder teilweise aus einem anderen Metall und/oder einem geeigneten Kunststoff ausgeführt sein.

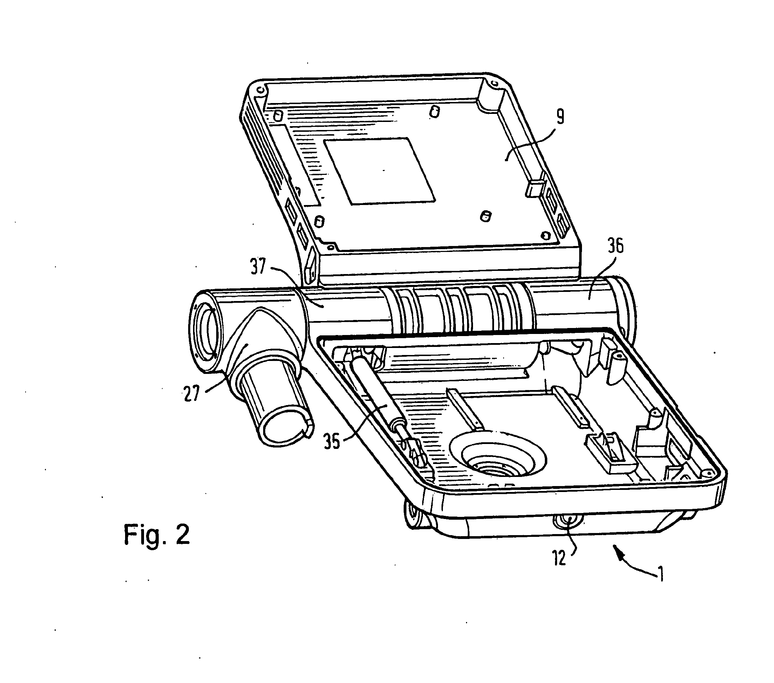

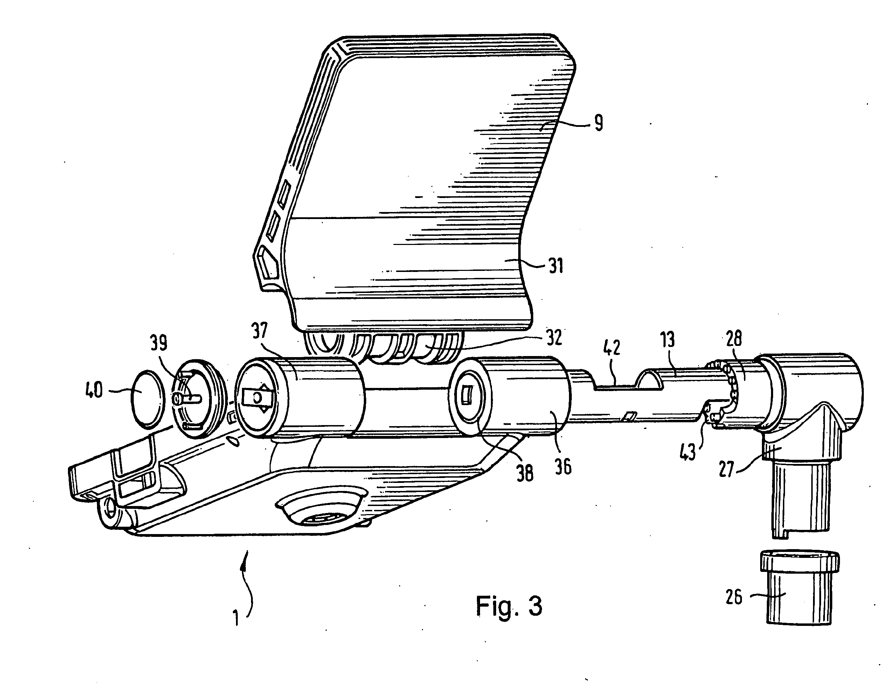

Als Verbindungselement zwischen der unteren Gehäuseschale 1 und dem oberen Gehäuseteil 9 dient hier eine Hohlwelle 13, die im Folgenden anhand der Figuren 2, 3 ausführlicher beschrieben wird. An dem in Fig. 1 linken Ende dieser Hohlwelle 13 ist ein rohrförmiger Tragholm 15 verschwenkbar und arretierbar gelagert, in welchem ein Teleskoprohr 16 längs verschiebbar aufgenommen ist. Dieses Teleskoprohr 16 weist einen rechtwinklig abgebogenen Abschnitt 17 auf, der ein zylindrisches Sitzpolster 18 trägt. Ein Fixiermechanismus 19 dient zum Feststellen des Teleskoprohrs 16 in einer gewählten ausgezogenen Lage in dem Tragholm 15. Dieser Tragholm 15 ist mit seinem oberen Ende auf dem Endteil der Hohlwelle 13 verschwenkbar gelagert und kann in einer eingeklappten Stand-by-Stellung sowie in mindestens einer - dargestellten - ausgeschwenkten Betriebsstellung festgestellt werden.

An der in Fig. 1 rechten Seite der unteren Gehäuseschale ist eine Auflageplatte 20 vorgesehen, die mit der unteren Gehäuseschale 1 fest verbunden sein kann und mit dieser Schwenkbewegungen ausführt. Allerdings kann diese Auflageplatte 20 auch über eigene Lager bzw. Gelenke auf der Hohlwelle 11 bzw. an der unteren Gehäuseschale 1 verschwenkbar befestigt sein. Diese Auflagerplatte 20 dient als Auflage für eine PC-Maus zur Bedienung verschiedener Funktionen des Bedienpults bzw. der Maschinensteuerung.

Ferner ist an der rechten Seite des oberen Gehäuseteils 9 ein plattenförmiger Beleghalter 23 vorgesehen, der bei dem dargestellten Ausführungsbeispiel über einen Sockel 24 an der unteren Rückseite des oberen Gehäuseteils 9 befestigt ist, sodass dieser Beleghalter 23 mit dem Gehäuseteil 9 mitschwenkt. Der Beleghalter 23 kann auch über Gelenke verfügen, die ein eigenständiges Ein- bzw. Ausklappen in eine geeignete Betriebsstellung ermöglichen.

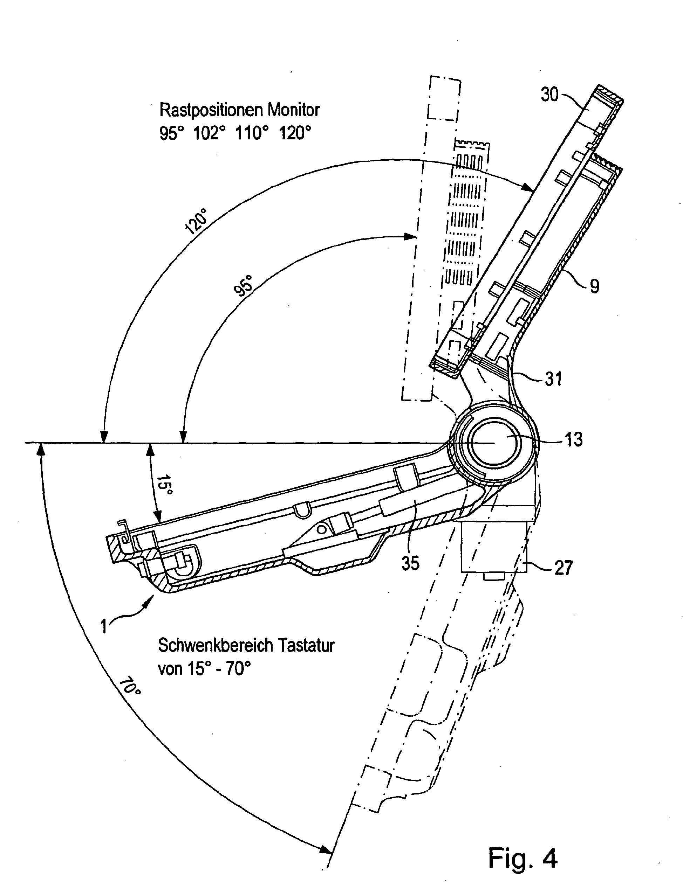

Das in Fig. 1 dargestellte Bedienpult stützt sich mit seiner unteren Gehäuseschale 1 auf einem nach aufwärts gerichteten Abschnitt eines Tragarms 25 ab, dessen obere Endbuchse 26 über ein hohles T-Stück 27 verdrehbar auf der Hohlwelle 13 gelagert ist (vgl. Fig. 2 bis 4). Mit Hilfe von Begrenzungsanschlägen 28 kann die Schwenkstellung der jeweiligen Gehäuseteile 1, 9 in den in Fig. 4 dargestellten Winkelbereichen begrenzt werden.

Wie aus Fig. 2 ersichtlich, ist der obere Gehäuseteil 9 in Form eines flachen Kastens aus z.B. Leichtmetallguss oder einem geeigneten Kunststoff ausgebildet und hat eine geringere Breite als die untere Gehäuseschale 1. Auf diesem oberen Gehäuseteil 9 wird ein in Fig. 1 dargestellter Rahmen 30 beispielsweise durch Schrauben befestigt, welcher den Bildschirm 10 allseitig umgibt. In dem flachen Innenraum des oberen Gehäuseteils 9 sind verschiedenartige Elemente z.B. zum Ansteuern des Bildschirms angeordnet, die über - nicht dargestellte - Kabel mit der Hauptsteuerung der Werkzeugmaschine verbunden sind.

Wie aus Fig. 3 ersichtlich, weist der obere Gehäuseteil 9 in seinem unteren Bereich einen bogenförmig gewölbten Abschnitt 31 auf, an dessen mittlerem Teil nach unten vorstehende Lagerbuchsen 32 angeformt bzw. befestigt sind. An diesem bogenförmig gewölbten Abschnitt 31 kann der Beleghalter 23 über seinen Fuß 24 befestigt sein.

Gemäß Fig. 2, 3, hat die untere Gehäuseschale 1 eine größere Breite und auch Tiefe als der obere Gehäuseteil 9. Auch die untere Gehäuseschale 1 besteht zweckmäßig aus einem Leichtmetallguss oder einem geeigneten Kunststoff. Im Innenraum der unteren Gehäuseschale 1 in dem in Fig. 2 linken Teil ist ein Druckmittelzylinder 35 angeordnet, der von dem stirnseiten Knopf 12 betätigt wird und auf ein - nicht dargestelltes - schalenförmiges Klemmstück einwirkt, das gegen eine Mantelfläche der Hohlwelle 13 drückt und die untere Gehäuseschale 1 gegen Verschwenkung arretiert.

An der rückwärtigen Breitseite der unteren Gehäuseschale 1 sind zwei Lagerbuchsen 36, 37 angeformt, in deren Zwischenraum die am unteren Ende des gewölbten Abschnitts 31 angeformte Lagerbuchse 32 des oberen Gehäuseteils 9 eingreift. Im zusammengebauten Zustand wird die Hohlwelle 13 in diesen drei Lagerbuchsen 32, 36, 37 aufgenommen. In den Stirnflächen der Lagerbuchsen 36, 37 sind O-Klemmringe 38 angeordnet. Durch Anziehen einer Spannschraube 39 in einem Deckel 40 wird auf die Lagerbuchsen 36, 37 und 32 eine axiale Spannung ausgeübt, die als Verdreh-Hemmung bzw. VerdrehSicherung wirkt.

Nach Fig. 3 sind in der Hohlwelle 13 zwei seitliche Ausschnitte 42, 43 ausgebildet, die zum Durchführen der - nicht dargestellten - Kabel einerseits in den Innenraum des oberen Gehäuseteils 9 und andererseits in den Innenraum der unteren Gehäuseschale 1 dienen.

In Fig. 4 sind bevorzugte Schwenkbereiche der unteren Gehäuseschale 1 mit der Tastatur und des oberen Gehäuseteils 9 mit dem vom Rahmen 30 umgebenen Bildschirm gezeigt. Der Schwenkbereich der unteren Gehäuseschale 1 mit Tastatur beträgt zwischen 15° und 70° zur Horizontalen und der Schwenkbereich des oberen Gehäuseteils 9 mit dem Bildschirm (Monitor) liegt bei max. 120°, wobei der obere Gehäuseteil in vorgegebenen Raststellungen bei 95°, 102°, 110° und 120° manuell vom Bediener feststellbar ist.

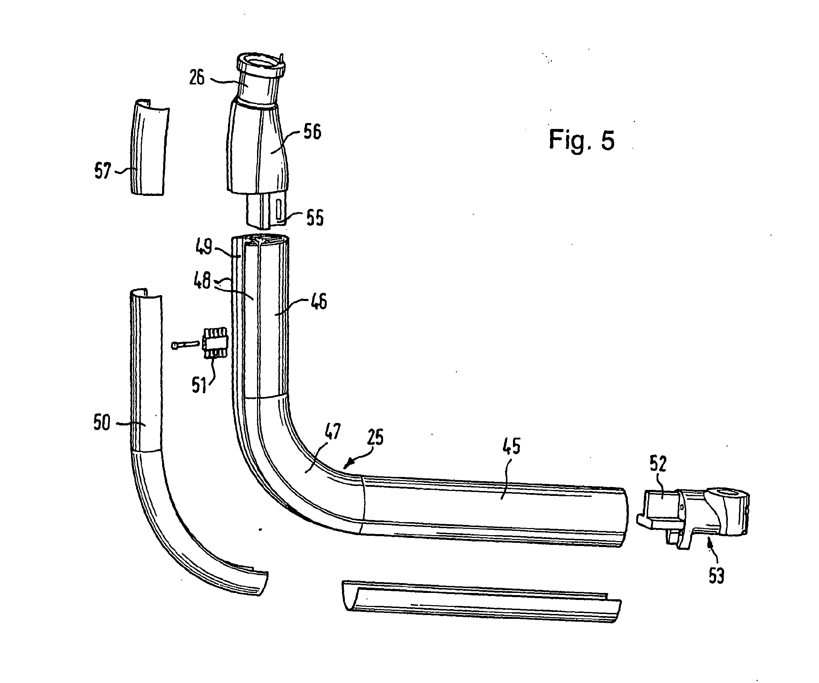

Aus Fig. 5 ist eine Ausführung eines abgebogenen Tragarms 25 ersichtlich, der einen horizontalen Abschnitt 45, einen hier vertikal verlaufenden Abschnitt 46 sowie einen bogenförmigen Zwischenabschntit 47 aufweist. Der gesamte Tragarm 25 besteht aus einem stranggepressten Leichtmetall-Hohlprofil von etwa elliptischem Außenquerschnitt, in dessen Innenraum mehrere radial verlaufende und axial durchgehende Versteifungsstege ausgebildet sind. Eine Außenseite dient als Kabelkanal und wird von zwei seitlichen Wangen 48 begrenzt. Abgedeckt wird der Kabelkanal 49 durch ein bogenförmiges Abdeckelement 50. Zur Sicherung der im Kabelkanal 49 verlaufenden Vielzahl unterschiedlicher Kabel dient ein Kabelhalter 51, der als Elastomer-Block ausgeführt ist und eine Vielzahl nebeneinanderliegender Bohrungen zur Aufnahme und Halterung je eines Kabels aufweist.

In das maschinenseitige Ende des horizontalen Abschnitts 45 des Tragarms 25 greift ein T-Stück 52 ein, das Teil eines Schwenklagers 53 ist, über welches der Tragarm 25 und damit auch das Bedienpult am Unterbau einer Werkzeugmaschine um eine vertikale Achse verschwenkbar angelenkt ist. In dieser Schwenklagerung sitzen - nicht dargestellte - Torsionsfederelemente.

In das obere Ende des vertikalen Abschnitts 46 des Tragarms 25 greift ein T-Stück 55 eines hohlen Anschlussteils 56 ein, dessen eine Seite durch eine Abdeckung 57 abgedeckt wird. In dieses Anschlussteil 56 greift die in Fig. 3 dargestellte Kragenbuchse 26 ein.

Die Erfindung ist nicht auf die dargestellten Ausführungsbeispiele beschränkt. So können die Gehäuseteile 1, 9 auch aus anderen geeigneten Werkstoffen bestehen und je nach Größe und Anzahl ihrer Einbauten eine andere Form haben. Wesentlich ist ihre gegeneinander und im Raum verschwenkbare Anordnung, die eine für den Bediener und Betrachter günstige Raumlage ermöglichen.

## Patentansprüche

1. Bedienpult für eine Werkzeugmaschine mit
- einem Tragarm (25),
- einem an dem Tragarm (25) montierten Gehäuse (1, 9), das eine untere Gehäuseschale (1) und einen gesonderten oberen Gehäuseteil (9) aufweist, wobei in der unteren Gehäuseschale (1) ein Tatenfeld (4,5) angeordnet ist, und im oberen Gehäuseteil (9) eine Anzeigeeinheit mit einem Bildschirm (10) angeordnet ist, wobei
- die untere Gehäuseschale (1) und der obere Gehäuseteil (9) auf einer gemeinsamen Hohlwelle (13) verschwenkbar gelagert und in bevorzugten Betriebsstellungen arretierbar sind und
- auf der Hohlwelle (13) eine Lageranordnung als Verbindungselement zum oberen Ende des Tragarms (25) angeordnet ist, das eine Kabeldurchführung darstellt.

2. Bedienpult nach Anspruch 1,
**dadurch gekennzeichnet, dass**
in der Hohlwelle (13) seitliche Ausschnitte (42, 43) zur Kabeldurchführung in die untere Gehäuseschale (1) und in den oberen Gehäuseteil (9) vorgesehen sind.

3. Bedienpult nach einem der vorstehenden Ansprüche,
**dadurch gekennzeichnet, dass**
zum Feststellen der unteren Gehäuseschale (1) und des oberen Gehäuseteils (9) jeweils in der bevorzugten Betriebsstellung gesonderte oder gemeinsame Klemm- oder Rastmechanismen (35, 38) vorgesehen sind.

4. Bedienpult nach einem der vorstehenden Ansprüche,
**dadurch gekennzeichnet, dass**
eine seitlich abstehende verschwenkbare Auflageplatte (20) vorgesehen ist.

5. Bedienpult nach Anspruch 4,
**dadurch gekennzeichnet, dass**
die Auflageplatte (20) über einen rückseitigen Halter an der Hohlwelle (13) gelagert und zusammen mit der unteren Gehäuseschale (1) verschwenkbar ist.

6. Bedienpult nach einem der vorstehenden Ansprüche,
**dadurch gekennzeichnet, dass**
ein seitlich abstehender verschwenkbarer Beleghalter (23) vorgesehen ist.

7. Bedienpult nach Anspruch 6,
**dadurch gekennzeichnet, dass**
der plattenförmige Beleghalter (23) seitlich abstehend an dem oberen Gehäuseteil (9) montierbar ist.

8. Bedienpult nach einem der vorstehenden Ansprüche,
**dadurch gekennzeichnet, dass**
an der unteren Gehäuseschale (1) Berechtigungstasten (7) für verschiedene Bedienungsarten und -personen sowie eine übergeordnete Schlüsselaufnahme (6) vorgesehen sind.

9. Bedienpult nach einem der vorstehenden Ansprüche,
**dadurch gekennzeichnet, dass**
ein aus einer Stand-by-Position in eine Betriebsstellung verstellbarer Sitz (17, 18) für den Bediener vorgesehen ist.

10. Bedienpult nach Anspruch 9,
**dadurch gekennzeichnet, dass**
der Sitz (17, 18) ein horizontales Sitzelement (18) und einen teleskopisch längs verstellbaren Tragholm (15, 16) aufweist, der an der Hohlwelle (13) verschwenkbar und arretierbar gelagert ist.

11. Bedienpult nach einem der vorstehenden Ansprüche,
**dadurch gekennzeichnet, dass**
ein an dem Endabschnitt des Tragarms (25) vorgesehenes T-Stück (27) auf der Hohlwelle (13) verdrehbar gelagert ist.

12. Bedienpult nach Anspruch 11,
**dadurch gekennzeichnet, dass**
das T-Stück (27) verdrehbar auf der Hohlwelle (13) gelagert ist und Begrenzungsanschläge (28) vorgesehen sind, mit denen die Schwenkstellung der Gehäuseschale (1) und des oberen Gehäuseteils (9) begrenzt werden kann.

13. Bedienpult nach einem der vorstehenden Ansprüche,
**dadurch gekennzeichnet, dass**
der obere Gehäuseteil (9) an einem unteren Abschnitt (31) mittige Lagerbuchsen (32) aufweist und an der unteren Gehäuseschale (9) zwei seitliche Lagerbuchsen (36, 37) vorgesehen sind, wobei die Lagerbuchsen (32) des oberen Gehäuseteils (9) in den Zwischenraum zwischen den beiden Lagerbuchsen (36, 37) der Gehäuseschale (1) eingreifen und die Hohlwelle (13) in diesen Lagerbuchsen (32, 36, 37) aufgenommen ist.

14. Bedienpult nach Anspruch 13,
**dadurch gekennzeichnet, dass**
Spannelemente (39) vorgesehen sind, die eine als Verdrehsicherung wirkende Spannung auf die Lagerbuchsen (32, 36, 37) ausüben.

15. Bedienpult nach einem der vorstehenden Ansprüche,
**dadurch gekennzeichnet, dass**
in der Hohlwelle (13) seitliche Ausschnitte (42, 43) ausgebildet sind, die zur Kabeldurchführung in den Innenraum des oberen Gehäuseteils (9) und in den Innenraum der unteren Gehäuseschale (1) dienen.

16. Bedienpult nach einem der vorstehenden Ansprüche,
**dadurch gekennzeichnet, dass**
der Tragarm (25) als stranggepresstes Hohlprofil ausgebildet ist, in dessen maschinenseitigem Endteil ein T-Stück (52) eines am Maschinenunterbau festgelegten Schwenklagers (53) eingreift und in dessen oberem Endteil ein T-Stück (55) eines Anschlussteils (56) eingesetzt ist.

## Claims

1. A control box for a machine tool, comprising:
- a supporting arm (25),
- a housing (1, 9) mounted on said supporting arm (25), said housing including a lower housing shell (1) and a separate upper housing part (9), a keypad (4, 5) being arranged on said lower housing shell and a display unit comprising a screen (10) being arranged on said upper housing part, wherein
- said lower housing shell (1) and said upper housing part (9) are pivotably supported on a common hollow shaft (13) and lockable in preferred operating positions, and
- a bearing arrangement serving as a connecting element to the upper end of the supporting arm (25) serving as a cable feed-through is arranged on the hollow shaft (13).

2. The control box according to claim 1,
**characterized in that**
lateral apertures (42, 43) are provided in the hollow shaft (13) for feeding cables through into the lower housing shell (1) and into the upper housing part (9).

3. The control box according to any one of the preceding claims,
**characterized in that**
for locking said lower housing shell (1) and said upper housing part (9), separate or common clamping or catch mechanisms (35, 38) are provided in said respectively preferred operating position.

4. The control box according to any one of the preceding claims,
**characterized in that**
a laterally projecting, pivotable support plate (20) is provided.

5. The control box according to claim 4,
**characterized in that**
said support plate (20) is supported on the hollow shaft (13) via a rear side support and is pivotable together with said lower housing shell (1).

6. The control box according to any one of the preceding claims,
**characterized in that**
a laterally protruding, pivotable document clamp (23) is provided.

7. The control box according to claim 6,
**characterized in that**
said plate-shaped document clamp (23) is mountable on said upper housing part (9) so as to protrude laterally.

8. The control box according to any one of the preceding claims,
**characterized in that**
authorization keys (7) for different operating modes and operating persons as well as an overriding key seating (6) are provided on the lower housing shell (1).

9. The control box according to any one of the preceding claims,
**characterized in that**
a seat (17, 18) displaceable from a stand-by position to an operating position is provided for an operator.

10. The control box according to claim 9,
**characterized in that**
said seat (17, 18) comprises a horizontal seat element (18) and a telescopic, longitudinally adjustable supporting beam (15, 16) supported on the hollow shaft (13) so as to be pivotable and lockable.

11. The control box according to any one of the preceding claims,
**characterized in that**
a T-piece (27) provided at an end portion of said supporting arm (25) is rotatably supported on the hollow shaft (13).

12. The control box according to claim 11,
**characterized in that**
said T-piece (27) is rotatably supported on the hollow shaft (13) and limitation stoppers (28) are provided with the aid of which the pivoting position of the housing shell (1) and the upper housing part (9) can be limited.

13. The control box according to any one of the preceding claims,
**characterized in that**
the upper housing part (9) has central bearing bushes (32) on a lower portion (31) and two lateral bearing bushes (36, 37) are provided on the lower housing shell (9), the bearing bushes (32) of the upper housing part (9) engaging with the intermediate space between the two bearing bushes (36, 37) of the housing shell (1) and the hollow shaft (13) being accommodated in these bearing bushes (32, 36, 37).

14. The control box according to claim 13,
**characterized in that**
tightening elements (39) are provided which apply pressure acting as a twist-inhibition to the bearing bushes (32, 36, 37).

15. The control box according to any one of the preceding claims,
**characterized in that**
lateral apertures (42, 43) are formed in the hollow shaft (13) which serve for feeding cables through into the interior of the upper housing part (9) and into the interior of the lower housing shell (1).

16. The control box according to any one of the preceding claims,
**characterized in that**
the supporting arm (25) is formed as an extruded hollow profile in the machine side end portion of which a T-piece (52) of a pivoting bearing (53) fixed to the machine base is engaged and into the upper end portion of which a T-piece (55) of a connecting part (56) is inserted.

## Revendications

1. Pupitre de commande pour une machine-outil comportant
- un bras de support (25),
- un boîtier (1, 9) monté sur le bras de support (25), ledit boîtier comportant une coque de boîtier inférieure (1) et une partie de boîtier supérieure séparée (9), dans lequel un clavier (4, 5) est agencé dans la coque de boîtier inférieure (1), et une unité d'affichage munie d'un écran (10) est agencée dans la partie de boîtier supérieure (9), dans lequel
- la coque de boîtier inférieure (1) et la partie de boîtier supérieure (9) sont supportées de manière à pouvoir pivoter sur un arbre creux commun (13) et peuvent être bloquées dans des positions de fonctionnement préférées et
- sur l'arbre creux (13) est agencé un agencement de support servant d'élément de liaison avec l'extrémité supérieure du bras de support (25), ledit élément de liaison faisant office de traversée de câbles.

2. Pupitre de commande selon la revendication 1, **caractérisé en ce que** dans l'arbre creux (13) sont prévues des découpes latérales (42, 43) pour la traversée de câbles dans la coque de boîtier inférieure (1) et dans la partie de boîtier supérieure (9).

3. Pupitre de commande selon l'une quelconque des revendications précédentes, **caractérisé en ce que** des mécanismes de serrage ou d'arrêt communs ou séparés (35, 38) sont prévus pour immobiliser la coque de boîtier inférieure (1) et la partie de boîtier supérieure (9) respectivement dans la position de fonctionnement préférée.

4. Pupitre de commande selon l'une quelconque des revendications précédentes, **caractérisé en ce qu'**une plaque de support (20) pouvant pivoter et faisant saillie latéralement est prévue.

5. Pupitre de commande selon la revendication 4, **caractérisé en ce que** la plaque de support (20) est supportée sur l'arbre creux (13) par l'intermédiaire d'un support arrière et peut pivoter conjointement avec la coque de boîtier inférieure (1).

6. Pupitre de commande selon l'une quelconque des revendications précédentes, **caractérisé en ce qu'**un porte-documents (23) pouvant pivoter et faisant saille latéralement est prévu.

7. Pupitre de commande selon la revendication 6, **caractérisé en ce que** le porte-documents en forme de plateau (23) peut être monté sur la partie de boîtier supérieure (9) en faisant saillie latéralement.

8. Pupitre de commande selon l'une quelconque des revendications précédentes, **caractérisé en ce que** des touches d'autorisation (7) sont prévues sur la coque de boîtier inférieure (1) pour différents modes d'exploitation et différents opérateurs, ainsi qu'un récepteur de clé principal (6).

9. Pupitre de commande selon l'une quelconque des revendications précédentes, **caractérisé en ce qu'**un siège (17, 18) réglable d'une position de repos à une position d'utilisation est prévu pour l'opérateur.

10. Pupitre de commande selon la revendication 9, **caractérisé en ce que** le siège (17, 18) comporte un élément de siège horizontal (18) et une barre de support télescopique, réglable longitudinalement (15, 16), ladite barre étant supportée sur l'arbre creux (13) de manière à pouvoir pivoter et être bloquée.

11. Pupitre de commande selon l'une quelconque des revendications précédentes, **caractérisé en ce qu'**une pièce en T (27) prévue sur la partie d'extrémité du bras de support (25) est supportée sur l'arbre creux (13) de manière rotative.

12. Pupitre de commande selon la revendication 11, **caractérisé en ce que** la pièce en T (27) est supportée de manière rotative sur l'arbre creux (13) et **en ce que** sont prévues des butées de limitation (28) qui permettent de limiter la position de pivotement de la coque de boîtier (1) et de la partie de boîtier supérieure (9).

13. Pupitre de commande selon l'une quelconque des revendications précédentes, **caractérisé en ce que** la partie de boîtier supérieure (9) comporte des coussinets de palier centraux (32) sur une partie inférieure (31), et deux coussinets de palier latéraux (36, 37) sont prévus sur la coque de boîtier inférieure (9), les coussinets de palier (32) de la partie de boîtier supérieure (9) étant insérés dans l'espace entre les deux coussinets de palier (36, 37) de la coque de boîtier (1), et l'arbre creux (13) étant reçu dans ces coussinets de palier (32, 36, 37).

14. Pupitre de commande selon la revendication 13, **caractérisé en ce que** sont prévus des éléments de tension (39) qui appliquent une tension sur les coussinets de palier (32, 36, 37) de manière à empêcher une rotation.

15. Pupitre de commande selon l'une quelconque des revendications précédentes, **caractérisé en ce que** dans l'arbre creux (13) sont formées des découpes latérales (42, 43) servant pour la traversée de câbles à l'intérieur de la partie de boîtier supérieure (9) et à l'intérieur de la coque de boîtier inférieure (1).

16. Pupitre de commande selon l'une quelconque des revendications précédentes, **caractérisé en ce que** le bras de support (25) est configuré sous la forme d'un profilé creux extrudé, dans la partie d'extrémité côté machine duquel pénètre une pièce en T (52) d'un palier pivotant (53) fixé sur le bâti de machine, et dans la partie d'extrémité supérieure duquel est insérée une pièce en T (55) d'un raccord (56).
